Europäisches Patentamt

European Patent Office

Office européen des brevets

(19)

(11) Veröffentlichungsnummer : **0 000 901**
**B1**

(12) **EUROPÄISCHE PATENTSCHRIFT**

(45) Veröffentlichungstag der Patentschrift :
23.05.84

(51) Int. Cl.³ : **C 01 B 21/14**

(21) Anmeldenummer : **78100630.9**

(22) Anmeldetag : **09.08.78**

(54) **Verfahren zur Herstellung von Hydroxylammoniumsalzen.**

(30) Priorität : **16.08.77 DE 2736906**

(43) Veröffentlichungstag der Anmeldung :
**07.03.79 Patentblatt 79/05**

(45) Bekanntmachung des Hinweises auf die Patenterteilung : **23.05.84 Patentblatt 84/21**

(84) Benannte Vertragsstaaten :
**BE CH DE FR GB NL**

(56) Entgegenhaltungen :
**CH-A- 339 912**
**DD-A- 2 100 036**
**DE-A- 1 567 834**
**DE-A- 1 667 045**
**DE-A- 1 806 537**
**DE-B- 1 117 118**
**DE-B- 1 567 832**
**DE-B- 1 667 513**
**DE-C- 900 213**
**NL-A- 6 908 934**
**Die Akte enthält technische Angaben, die nach dem
Eingang der Anmeldung eingereicht wurden und die
nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Rapp, Guenther, Dr.**
**Mundenheimer Strasse 174**
**D-6700 Ludwigshafen (DE)**
Erfinder : **Kartte, Klaus, Dr.**
**Stettiner Strasse 1**
**D-6711 Beindersheim (DE)**
Erfinder : **Thomas, Erwin**
**Borngasse 12**
**D-6713 Freinsheim (DE)**
Erfinder : **Matsumoto, Genya**
**20-5 Hoshigoe-Cho**
**Niihama Ehime Pref. (JP)**

0 000 901

**Beschreibung**

Gegenstand der Erfindung ist ein Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur.

Es ist bekannt, Hydroxylammoniumsalze durch Reduktion von Stickstoffmonoxid mit Wasserstoff in verdünnter wäßriger Mineralsäure, z. B. Schwefelsäure, in Gegenwart von Katalysatoren herzustellen. Als Katalysatoren verwendet man insbesondere Platin oder Platin mit Zusätzen, wobei das Katalysatormetall auf Trägerstoff niedergeschlagen ist. Solche Verfahren werden beispielsweise beschrieben in der DE-PS 956 038 und 945 752 oder den DE-AS 15 67 513 und 24 47 972. Der Platinträgerkatalysator wird in Mengen von 1 bis 33,4 g (vgl. DE-OS 12 19 453 und 21 00 036) je Liter Lösung angewandt. Die dabei erreichten Raum-Zeit-Ausbeuten betragen bis zu 0,45 Mol umgesetztes Stickstoffmonoxid pro Stunde und Liter Reaktionsflüssigkeit im Reaktionsraum. Die erzielten Hydroxylaminausbeuten, bezogen auf umgesetztes Stickstoffmonoxid, liegen bei 78 bis 92 % der Theorie. Da man bestrebt ist, möglichst hohe Raum-Zeit-Ausbeuten bei dem jeweils angewandten Druck zu erzielen, bestand weiterhin das Bedürfnis, das Verfahren zu verbessern.

Es war deshalb die technische Aufgabe gestellt, bei der Herstellung von Hydroxylammoniumsalzen durch katalytische Reduktion von Stickstoffmonoxid unter den jeweils angewandten Drücken die Raum-Zeit-Ausbeute zu erhöhen.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur, wobei man je Liter Reaktionslösung 40 bis 700 g Platinträgerkatalysator anwendet.

Das neue Verfahren hat den Vorteil, daß man bei unverändert hohen Ausbeuten unter den jeweils angewandten Drücken wesentlich höhere Raum-Zeit-Ausbeuten, bezogen auf Stickstoffmonoxid, erzielt. Hierdurch benötigt man bei der Herstellung gleicher Produktionsmengen kleinere Vorrichtungen, andererseits gelingt es mit den vorhandenen Vorrichtungen, größere Durchsätze zu erzielen.

Das neue Verfahren ist insofern bemerkenswert, als ein Zusammenhang zwischen erhöhter Katalysatormenge und steigender Raum-Zeit-Ausbeute aus dem Stand der Technik bislang nicht zu entnehmen war. So wurde beispielsweise nach dem in der DE-OS 21 00 036 beschriebenen Verfahren bei Verwendung von 33,4 g Katalysator pro Liter Lösung eine Raum-Zeit-Ausbeute von 0,24, gemäß DE-OS 18 06 537 bei Verwendung von 30,0 g Katalysator eine Raum-Zeit-Ausbeute von 0,40 Mol umgesetztes Stickstoffmonoxid pro Stunde und Liter Flüssigkeit im Reaktionsraum erzielt. Es war daher nicht abzusehen, daß man durch eine wesentliche Erhöhung der Katalysatormenge die Raum-Zeit-Ausbeute bei einer Arbeitsweise unter Atmosphärendruck fast auf das Doppelte des bisher Bekannten steigern kann. Insbesondere war nicht vorherzusagen, daß bei einer Arbeitsweise unter erhöhtem Druck die für sich schon zu höheren Raum-Zeit-Ausbeuten führt (vgl. DE-PS 900 213), trotzdem eine ebenso deutliche weitere Steigerung der Raum-Zeit-Ausbeute durch die Erhöhung der Katalysatormenge möglich ist. Dies gilt umsomehr, als lediglich die Erhöhung der Menge an Platin bei gleichbleibenden Trägermengen nicht zur Lösung der gestellten Aufgabe führt.

In der Regel hält man ein Molverhältnis von Wasserstoff zu Stickstoffmonoxid von mehr als 1, vorzugsweise von 1,5 : 1 bis 6 : 1 ein. Besonders gute Ergebnisse erhält man, wenn man darauf achtet, daß in der Reaktionszone ein Molverhältnis von Wasserstoff zu Stickstoff monoxid von 3,5 bis 5 : 1 aufrechterhalten wird.

Vorteilhaft verwendet man als Säuren starke Mineralsäuren, wie Chlorwasserstoffsäure, Salpetersäure, Schwefelsäure oder Phosphorsäure. Geeignet sind auch deren saure Salze, wie Ammoniumbisulfat. Besonders bevorzugt wird Schwefelsäure verwendet. In der Regel geht man von 4 bis 6 normalen wäßrigen Säuren aus und läßt im Verlauf der Reaktion die Säurekonzentration nicht unter 0,2 normal fallen.

Unter Reaktionslösung versteht man erfindungsgemäß die oben genannte Lösung von Säuren, die zusätzlich Hydroxylammoniumsalze, Nebenprodukte sowie gelöste Gase enthalten können. Die Umsetzung führt man vorteilhaft bei Temperaturen von 30 bis 80 °C durch. Besonders bewährt haben sich Temperaturen von 40 bis 60 °C. In der Regel führt man die Umsetzung bei Atmosphärendruck oder erhöhtem Druck, z. B. bis zu 30 bar durch. Es ist jedoch auch möglich, wesentlich höhere Drücke, z. B. bis zu 300 bar, anzuwenden.

Die Umsetzung wird in Gegenwart von Platinträgerkatalysatoren durchgeführt. Besonders bewährt haben sich Platin auf Kohleträger, insbesondere auf Graphit. Vorzugsweise hat ein solcher Trägerkatalysator einen Gehalt von 0,2 bis 5 Gew.% Platin. Vorteilhaft enthalten die Katalysatoren zusätzlich ein oder mehrere Elemente der 5. und/oder 6. Hauptgruppe des periodischen Systems mit einem Atomgewicht > 31, ferner Blei und/oder Quecksilber als vergiftende Mittel. Geeignete Katalysatoren und deren Herstellung werden beispielsweise beschrieben in der DE-PS 920 963, 956 038, 945 752 oder 1 088 037. Während der Reaktion liegt der Trägerkatalysator als Suspension in der Reaktionslösung vor.

Wesentliches Merkmal der Erfindung ist es, daß man je Liter Reaktionslösung 40 bis 700 g Platinträgerkatalysator anwendet. Die obere Grenze der Katalysatorkonzentration wird lediglich durch

2

das Kriterium der ausreichenden Fließfähigkeit und Filtrierbarkeit der Suspension begrenzt. Vorzugsweise wendet man 40 bis 400 g Platinträgerkatalysator an. Falls man Aktivkohle als Träger verwendet, haben sich Mengen von 40 bis 250 g und falls man Graphit als Träger verwendet, haben sich Mengen von 40 bis 350 g Trägerkatalysator je Liter Reaktionslösung besonders bewährt.

Das Verfahren nach der Erfindung läßt sich diskontinuierlich oder kontinuierlich durchführen. Ein geeignetes kontinuierliches Verfahren wird beispielsweise in der DE-PS 1 113 448 beschrieben.

Erfindungsgemäß hergestellte Hydroxylammoniumsalze werden in großem Maßstab zur Herstellung von Cyclohexanonoxim, einem Vorprodukt für Caprolactam, verwendet.

Das Verfahren nach der Erfindung sei an folgenden Beispielen veranschaulicht.

### Beispiel 1 bis 6

In einem Druckgefäß mit Rührer werden gemessene Mengen eines Platin-Graphit-Katalysators mit einem Platingehalt von 0,5 Gew.% in 5 Liter 4,1 n-Schwefelsäure suspendiert. Bei einem Druck von 1 bzw. 9 bar abs. leitet man unter Rühren gemessene Mengen NO und $H_2$ im Volumen-Verhältnis 37 : 63 in den Reaktor ein, den man durch Kühlen auf einer Temperatur von 40 °C hält. Nicht umgesetzte Gase, die frei bzw. über ein Druckhalteventil entweichen, werden gemessen und analysiert. Wenn die Schwefelsäure nahezu aufgebraucht ist, beendet man die Reaktion, entspannt, trennt die Hydroxylaminlösung vom Katalysator ab und bestimmt die gebildete Menge Hydroxylamin.

Die näheren Einzelheiten sind aus folgender Tabelle zu entnehmen.

### Beispiel 7

Man verfährt wie in Beispiel 1 beschrieben, jedoch hat der Katalysator einen Platingehalt von 5,0 Gew.%. Die Ergebnisse entsprechend Tabelle zeigen, daß lediglich durch Erhöhung der Platinmenge bei gleichbleibender Trägermenge keine zusätzliche Verbesserung der Raum-Zeit-Ausbeute erreicht wird.

### (Siehe Tabelle Seite 4 f.)

3

Tabelle

| Beispiel Nr. | 1 | 2 | 3 | 4 | 5 | 6 | 7 | |
|---|---|---|---|---|---|---|---|---|
| Katalysatorfüllung | 200 | 500 | 1 000 | 200 | 500 | 1000 | 200 | g |
| Katalysatorkonzentr. | 40 | 100 | 200 | 40 | 100 | 200 | 40 | g/l |
| Endkonzentration der Reaktionslösung | .0,45 | 0,43 | 0,61 | 0,43 | 0,51 | 0,47 | 0,44 | $nH_2SO_4$ |
| Druck | 1 | 1 | 1 | 9 | 9 | 9 | 1 | bar abs. |
| Reaktionszeit | 450 | 285 | 270 | 65 | 45 | 35 | 450 | Minuten |
| umgesetzte NO-Menge | 440 | 437 | 429 | 436 | 412 | 412 | 437 | N l |
| gebildete $NH_2OH$-Menge | 583 | 574 | 519 | 588 | 573 | 565 | 540 | g |
| $NH_2OH$-Ausbeute bez. umges. NO | 89,9 | 89,2 | 82,1 | 91,5 | 94,4 | 93,1 | 83,8 | % |
| Raum-Zeit-Ausbeute | 0,52 | 0,82 | 0,85 | 3,6 | 4,9 | 6,3 | 0,52 | mol umges. NO[*] Std.1 Fl in RR |

*) mol ungesetztes Stickstoffmonoxid je Stunde und Liter Flüssigkeit im Reaktionsraum

0 000 901

**0 000 901**

### Ansprüche

1. Verfahren zur Herstellung von Hydroxylammoniumsulfat durch katalytische Reduktion von Stickstoffmonoxid mit Wasserstoff in verdünnten wäßrigen Lösungen von Schwefelsäure oder Ammoniumbisulfat in Gegenwart von suspendierten Platinträgerkatalysatoren bei erhöhter Temperatur, dadurch gekennzeichnet, daß man je Liter Reaktionslösung 40 bis 700 g Platinträgerkatalysator anwendet.

2. Verfahren nach Anspruch 1, dadurch gekennzeichnet, daß man je Liter Reaktionslösung 40 bis 400 g Platinträgerkatalysatoren anwendet.

3. Verfahren nach den Ansprüchen 1 und 2, dadurch gekennzeichnet, daß man Platin-Graphit-Trägerkatalysatoren verwendet.

### Claims

1. A process for the manufacture of hydroxylammonium sulfate by catalytically reducing nitric oxide with hydrogen in a dilute aqueous solution of sulfuric acid or ammonium bisulfate in the presence of a suspended supported platinum catalyst at an elevated temperature, wherein from 40 to 700 g of supported platinum catalyst are used per liter of reaction solution.

2. A process as claimed in claim 1, wherein from 40 to 400 g of supported platinum catalyst are used per liter of reaction solution.

3. A process as claimed in claims 1 and 2, wherein a platinum/graphite supported catalyst is used.

### Revendications

1. Procédé de préparation de sulfate d'hydroxylammonium par réduction catalytique d'oxyde azotique avec de l'hydrogène en solutions aqueuses diluées d'acide sulfurique ou de bisulfate d'ammonium, en présence de catalyseur sur support de platine, à températures élevées, caractérisé par le fait que l'on utilise, par litre de solution de réaction, 40 à 700 g de catalyseur sur support de platine.

2. Procédé selon la revendication 1, caractérisé par le fait que l'on utilise, par litre de solution de réaction, 40 à 400 g de catalyseur sur support de platine.

3. Procédé selon les revendications 1 et 2, caractérisé par le fait que l'on utilise des catalyseurs sur support platine-graphite.

5